# EUROPÄISCHE PATENTSCHRIFT

(11) **EP 3 259 144 B1**
(45) Veröffentlichungstag und Bekanntmachung des Hinweises auf die Patenterteilung: **03.04.2019**
(21) Anmeldenummer: 16701974.4
(22) Anmeldetag: 01.02.2016
(51) Int. Cl.: B60C 23/04

(54) **SENSOR FÜR EIN REIFENDRUCKKONTROLLSYSTEM**
SENSOR FOR A TIRE PRESSURE MONITORING SYSTEM
CAPTEUR POUR UN SYSTEME DE SURVEILLANCE DE PRESSION DE PNEUMATIQUE

(30) Priorität: 18.02.2015 DE 102015102324
(43) Veröffentlichungstag der Anmeldung: 27.12.2017
(73) Patentinhaber: Huf Hülsbeck & Fürst GmbH & Co. KG, 42551 Velbert (DE)
(72) Erfinder: DUSSINGER, Axel, 74906 Bad Rappenau (DE); GORENZWEIG, Igor, 42109 Wuppertal (DE); GAMER, Benedikt, 75045 Walzbachtal (DE); TUNC, Erdinc, 74248 Ellhofen (DE)
(74) Vertreter: Zenz Patentanwälte Partnerschaft mbB
(86) Internationale Anmeldenummer: PCT/EP2016/052035
(87) Internationale Veröffentlichungsnummer: WO 2016/131638

(56) Entgegenhaltungen:
- EP-A1- 0 417 704
- EP-A1- 2 465 712
- DE-U1-202004 000 368
- US-A1- 2007 044 552

## Beschreibung

Die Erfindung betrifft einen Sensor für ein Reifendruckkontrollsystem (TPMS).

Insbesondere betrifft die Erfindung einen Drucksensor für ein TPMS, wobei der Sensor ein Gehäuse aufweist, das aus wenigstens zwei Gehäuseteilen aufgebaut ist und mit einer im Gehäuse angeordneten Platine mit elektronischen Bauteilen. Die elektronischen Bauteile bilden wenigstens eine Schaltung zur Erfassung eines Gasdrucks und ermöglichen eine drahtlose Übertragung von Messdaten an eine entfernte, am Fahrzeug angeordnete Empfangseinrichtung. Eine Batterie ist zur Versorgung der elektronischen Bauteile in dem Gehäuse aufgenommen.

Eine gattungsgemäße Sensoranordnung ist beispielsweise aus dem Dokument EP 2002 15 232 A bekannt. Die Sensoren sind für eine Montage am Rad eines Fahrzeugs ausgebildet und werden häufig am Ventilschaft eines Reifendruckventils angebracht. Während das Ventil durch die Felge geführt ist sind die Sensoren auf der Reifeninnenseite platziert, üblicherweise an der Felge anliegend. Dort erfassen sie den Reifendruck und übermitteln die Druckdaten (und ggf. weitere Daten) drahtlos an eine zentrale Empfangseinrichtung im Fahrzeug. Die Sensoren werden dabei in unterschiedlich geformten Gehäusen aufgenommen, wobei die Gehäuse zumindest eine Schaltplatine mit elektronischen Bauteilen und eine Energiequelle zur Versorgung in Gestalt einer Batterie aufweisen. Es sind auch Sensoren bekannt, die auf der Innenseite der Lauffläche eines Reifens angeordnet sind, also im Reifen mit Abstand zu dem Ventil befestigt sind. Der Oberbegriff vom Anspruch 1 weisst bekannte Merkmale aus dem Stand der Technik auf, gemäß dem Dokument EP 2 465 712 A1.

Aufgrund der erheblichen Kräfte, die in Fahrbetrieb eines Fahrzeuges auf die Sensoren und Komponenten einwirken, besteht für Verschleiß und Ausfall der Sensoren ein erhöhtes Risiko.

Aufgabe der Erfindung ist es, eine verbesserte Sensorgestaltung für im Reifen montierte Reifendruckkontrollsensoren vorzuschlagen, um die Widerstandsfähigkeit und die Ausfallsicherheit zu verbessern.

Diese Aufgabe wird erfindungsgemäß gelöst durch einen Reifendrucksensor mit den Merkmalen des Patentanspruchs 1.

Der erfindungsgemäße Reifendrucksensor weist gegenüber dem Stand der Technik eine gestapelte Anordnung von elektronischer Platine und Batteriezelle auf, die beide in dem Gehäuse des Drucksensors aufgenommen sind. Erfindungsgemäß ist zwischen der Batterie und der Platine ein elastisches Ausgleichselement angeordnet. Das elastische Ausgleichselement ist aus einem elektrisch isolierenden Material gebildet und liegt mit einer Seite an der Batterie an und mit seiner anderen Seite an der Platine. Es füllt zumindest über Abschnitte der Flächenerstreckung von Batterie und Platine den Abstand zwischen Platine und Batterie aus. Das elastische Ausgleichselement sorgt dafür, dass eine Bewegung der Batterie gegenüber der Platine nur in beschränktem Maße und auch nur in gedämpfter Weise möglich ist, nämlich bei Verformung des Ausgleichselements. Dadurch wird die mechanische Belastung von Kontaktierungen der Batterie verringert und es wird außerdem verhindert, dass bei den beachtlichen Fliehkräften im Fahrbetrieb die Batterie gegen die Platine schlägt.

Um eine satte Anlage der Batterie an dem Ausgleichselement und weiterhin des Ausgleichselements an der Platine zu gewährleisten, stütz sich die Batterie auf der vom Ausgleichselement abgewandten Seite am Gehäuse ab. Dies bedeutet, dass das Ausgleichselement zwischen Batterie und Platine durch die einwirkende Abstützkraft in zumindest leichter Kompression gehalten wird, um ein Spiel zwischen Batterie, Ausgleichselement und Platine zu vermeiden. Die Anlage der Batterie am Gehäuse kann dabei beispielsweise durch eine Ausbildung eines Gehäusevorsprungs ausgebildet sein.

Bevorzugt ist das Ausgleichselement aus einem elastischen Kunststoff gebildet, insbesondere geeignet sind geschlossenporige Schaumstoffe. Derartige geschlossenporige Schaumstoffe verhindern, dass Feuchtigkeit in das Ausgleichselement eindringt und möglicherweise eine elektrische Kontaktierung und Fehlschaltung erzeugt. Gleichzeitig ist ein Porenmaterial hinsichtlich seines Gewichtes optimiert.

In einer bevorzugten Gestaltung ist das Ausgleichselement als elastische Scheibe mit einheitlicher Dicke ausgebildet. Beispielsweise kann ein scheibenförmiger Ring gebildet sein oder eine Kreisscheibe oder auch eine rechteckige elastische Scheibe einheitlicher Dicke. Während das Ausgleichselement auch mehrteilig sein kann, beispielsweise durch mehrere elastische Auflagepunkte, ist die Montage eines einzigen elastischen Ausgleichselement mit einheitlicher Dicke besonders einfach, da nur das Element zwischen Batterie und Platine einzulegen ist und ggf. mit der Platine zu verkleben ist.

In einer besonders bevorzugten Ausgestaltung der Erfindung handelt es sich bei der Batterie um eine solche Batterie, die von zwei Seiten, insbesondere voneinander abgewandten Seiten zu kontaktierten ist. Dann weist der Aufbau wenigstens zwei elektrische Kontaktelemente auf, um die Batterie beidseitig zu kontaktieren. Eines der Kontaktelemente erstreckt sich von der Platine ausgehend um die Batterie herum und kontaktiert die von der Platine abgewandte Seite der Batterie. Ein anderes Kontaktelement erstreckt sich zwischen Platine und Batterie, insbesondere abschnittsweise zwischen dem Ausgleichselement und der Batterie.

In einer Weiterbildung der Erfindung ist wenigstens eines der Kontaktelemente mit einer mechanische Zug-/Druckentlastung ausgebildet. Da vorgesehen ist, dass die Batterie in eine satte Anlage mit dem Ausgleichselement und das Ausgleichselement in eine satte Anlage mit der Platine gedrängt wird, was durch die Abstützung der Batterie am Gehäuse erreicht wird, dürfen die Kontakte bei einer solchen Bewegung der Batterie in ihrer Endposition in satter Anlage nicht überlastet werden und ein Bruch muss verhindert werden. Die Zug-/Druckentlastung sorgt dafür, dass die Kontaktelemente die Bewegung der Batterie in ihrer Endposition mitvollziehen können, ohne einer mechanischen Überlastung ausgesetzt zu sein. Auch in Betrieb eignen sich die Zug-/Druckentlastungsbereiche Bewegungen der Batterie gegenüber der Platine materialschonend aufzunehmen.

In einer besonders bevorzugten Ausführungsform der Erfindung sind die Zug-/Druckentlastungsbereiche als gewinkelte oder gebogene Verformungen der Kontakte ausgebildet. Die Kontakte können beispielsweise gebogene Metallzungen sein, die von der Platine aus zu den Kontaktbereichen der Batterie geführt sind. Abschnittsweise kann eine beispielsweise S-förmige oder U-förmige Verformung der Kontakte vorgesehen sein, so dass in eine Stauchungsrichtung der Kontakte wirkende Kräfte durch diese Verformungsbereiche aufgenommen werden.

Es ist besonders bevorzugt, wenn das Ausgleichselement Aussparungen aufweist, in welchen sich wenigstens abschnittsweise eines der Kontaktelemente erstreckt. Das Ausgleichselement, welches beispielsweise als Ring oder Scheibe ausgebildet ist, kann Aussparungen in seinem Zentrum oder in Seitenbereichen aufweisen, um Erstreckungsraum und Bewegungsraum für die metallischen Kontaktelemente zu bieten. Insbesondere in dem Bereich, wo das Kontaktelement ausgehend von der Platine zwischen das Ausgleichselement um die Batterie geführt wird, kann eine Aussparung für eine mechanische Entlastung des Kontaktelementes sorgen, wobei gleichzeitig die Fixierungs- und Dämpfungswirkung des Ausgleichselementes zwischen Batterie und Platine aufrechterhalten wird.

Besonders geeignet ist in diesem Zusammenhang eine seitliche Ausklinkung aus dem Ausgleichselement, um ein seitlich zugeführtes Kontaktelement zwischen Ausgleichselement und Batterie zu führen. Die Erfindung wird nun anhand der beiliegenden Zeichnungen näher erläutert.
Figur 1a zeigt einen erfindungsgemäßen Reifendrucksensor nach einem ersten Ausführungsbeispiel mit gekoppeltem Reifendruckventil in einer ersten Ansicht;
Figur 1b zeigt die Anordnung aus Figur 1a in einer zweiten Ansicht;
Figur 2 zeigt in einer Explosionsdarstellung wesentliche Elemente des ersten Ausführungsbeispiels;
Figur 3 zeigt in einer teilgeschnittenen Darstellung einen Blick in das Gehäuse des ersten Ausführungsbeispiels;
Figur 4a zeigt die Anordnung von Platine, Ausgleichselement und Batterie mit Kontaktierung gemäß dem ersten Ausführungsbeispiel;
Figur 4b zeigt die Anordnung aus Figur 4a in einer anderen Perspektive;
Figur 5 zeigt ein zweites Ausführungsbeispiel mit abweichend realisierter Zugentlastung der Kontakte.

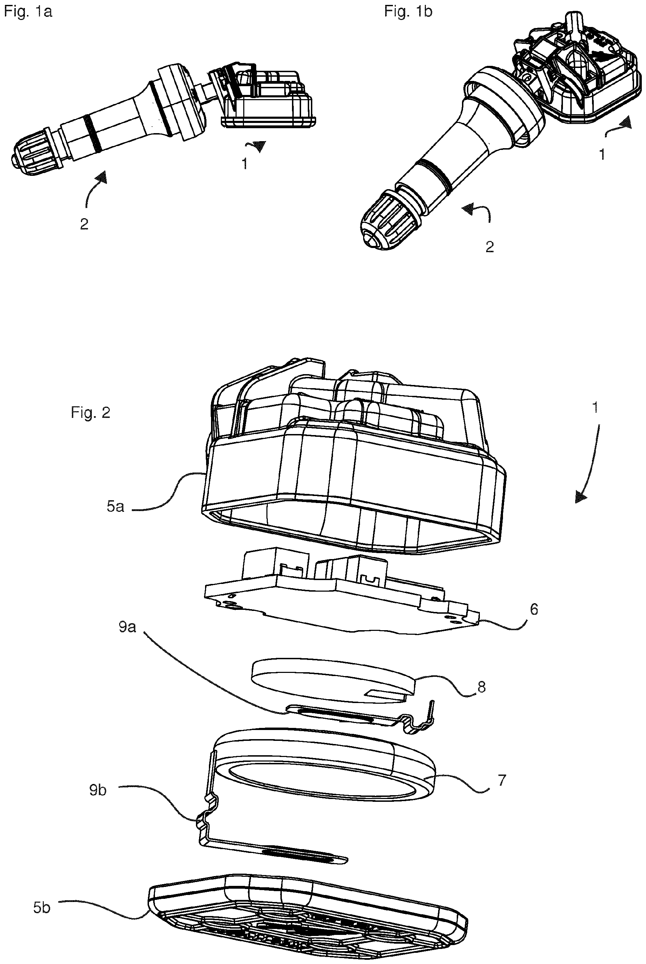

In Figur 1a ist eine Anordnung aus einem Reifendrucksensor 1 mit einem damit gekoppelten Reifenventil 2 gezeigt. Figur 1b zeigt die Anordnung aus anderer Perspektive. Der Schaft des Ventils 2 ist mechanisch mit dem Reifendrucksensor 1 gekoppelt und das Ventil würde im montierten Zustand aus der Felge eines Fahrzeuges herausragen. Der Reifendrucksensor 1 sitzt dann auf der Innenseite des Reifens an der Felge und erfasst dort auf der Innenseite des Reifens den Reifendruck und sendet die Informationen an eine entfernte Empfangseinrichtung. Da das Ventil für die Erfindung nicht wesentlich ist, wird es in den nachfolgenden Figuren weggelassen, um die Erfindung klarer darzustellen.

In Figur 2 ist der Aufbau eines erfindungsgemäßen Reifendrucksensors 1 gezeigt. Der Reifendrucksensor 1 weist ein Gehäuseteil 5a und ein Gehäusedeckel 5b auf. In dem Gehäuse aufgenommen sind eine Platine 6, eine Batterie 7 sowie ein Ausgleichselement 8, welches zwischen der Platine 6 und der Batterie 7 angeordnet ist. Die Kontaktierung der Batterie 7 erfolgt über zwei metallische Kontaktzungen 9a, 9b, welche die beiden voneinander abgewandten Seiten der Batterie 7 kontaktieren und eine elektrische Versorgung der Bauteile auf der Platine 6 sicherstellen.

Die Kontaktzungen 9a und 9b sind abschnittsweise mit gewinkelten und gebogenen Bereichen zur Zug-/Druckentlastung ausgebildet, um eine Bewegung der Batterie 7 gegenüber der Platine 6 mitvollziehen zu können.

Es ist außerdem dargestellt, dass das elastische Ausgleichselement 8 eine seitliche Ausklinkung aufweist, um den Verformungsbereich der Kontaktzungen 9a aufzunehmen und dort eine mechanische Verformung zu erlauben, ohne dass dieser Verformungsbereich durch das elastische Element 8 an die Platine 6 gepresst wird.

Das Ausgleichselement 8 ist so auf die Abmessungen und Montagepositionen der Platine 6 und der Batterie 7 sowie des Deckels 5b abgestimmt, dass beim Aufsetzen des Deckels 5b und der Befestigung des Deckels 5b an dem Gehäuseteil 5a eine Kompression des Ausgleichselementes 8 stattfindet.

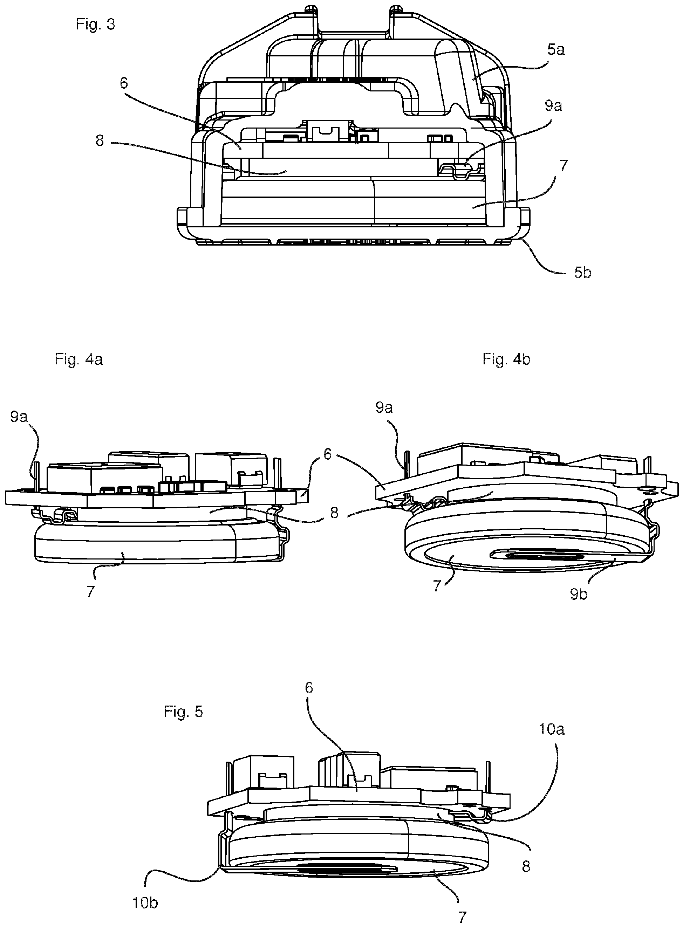

Die Situation des montierten Drucksensors ist in Figur 3 gezeigt. Die Batterie 7 stützt sich an dem Deckel 5b ab und komprimiert das Ausgleichselement 8 zwischen der Platine 6 und der Batterie 7. Die ausgeklinkte Aussparung in dem Ausgleichselement 8 nimmt den Verformungsbereich der Kontaktzungen 9a auf. Die Batterie ist gegenüber der Platine 6 nun spielfrei gehalten und auch bei Auftreten hoher Beschleunigungswerte wird eine Bewegung der Batterie in dem Gehäuse, insbesondere gegenüber der Platine 6 durch das Ausgleichselement 8 unterbunden. Das Ausgleichselement 8 ist in diesem Beispiel aus einem geschlossenporigen Schaumstoff gebildet, welcher vor dem Aufbringen der Batterie auf der Platine verklebt ist.

In den Figuren 4a und 4b sind die Komponenten der Platine 6, des Ausgleichselementes 8, der Batterie 7 und der Kontaktelemente 9a und 9b separat dargestellt. In dieser Darstellung wird die Kontaktierung und Durchführung der Kontakte durch die Platine 6 deutlich. Es ist ersichtlich, wie die verformten Bereiche der Kontaktstifte, welche in diesem Beispiel in S-Form ausgebildet sind, Bewegungen der Batterie gegenüber der Platine 6 aufnehmen können.

Figur 5 zeigt eine alternative Gestaltung, wobei der Unterschied in der Gestaltung der Verformungsbereiche der Kontakte 10a und 10b liegt, die hier keine S-förmige Verformung aufweisen, sondern jeweils U-förmig verformte Entlastungsabschnitte.

## Patentansprüche

1. Drucksensor (1) für ein Reifendruckkontrollsystem (TPMS), mit
einem Gehäuse (5a, 5b), welches aus wenigstens zwei Gehäuseteilen gebildet ist,
einer Platine (6) mit darauf angeordneten elektronischen Bauteilen, wobei die elektronischen Bauteile wenigstens eine Schaltung zur Erfassung eines Gasdrucks und einer drahtlosen Übertragung von Messdaten an eine entferne Empfangseinrichtung bilden,
einer Batterie (7) zur Versorgung der elektronischen Bauteile,
wobei die Batterie (7) und die Platine (6) gestapelt angeordnet sind und in dem Gehäuse (5a, 5b) aufgenommen sind,
wobei zwischen der Batterie (7) und der Platine (6) ein elastisches Ausgleichselement (8) aus einem elektrisch isolierenden Material angeordnet ist, welches jeweils einseitig an der Batterie (7) und der Platine (6) anliegt und
**dadurch gekennzeichnet, dass** die Batterie sich auf einer dem Ausgleichselement abgewandten Seite an dem Gehäuse (5a, 5b) abstützt.

2. Drucksensor nach Anspruch 1, wobei das Ausgleichselement aus einem elastischen Kunststoff, insbesondere einem geschlossenporigen Schaumstoff gebildet ist.

3. Drucksensor nach einem der vorangehenden Ansprüche, wobei das Ausgleichselement als elastische Scheibe mit einheitlicher Dicke ausgebildet ist.

4. Drucksensor nach einem der vorangehenden Ansprüche, wobei die Batterie mit wenigstens zwei elektrischen Kontaktelementen beidseitig kontaktiert ist, wobei die Kontaktelemente wenigstens abschnittsweise mit einer Zug-/Druckentlastung ausgebildet sind, so dass eine in Richtung der Kompression des elastischen Ausgleichselementes wirkende Kraft wenigstens teilweise von den der Zug-/Druckentlastung aufgenommen wird.

5. Drucksensor nach Anspruch 4, wobei die Zug-/Druckentlastung als gewinkelte oder gebogene Verformung der Kontakte ausgebildet ist, insbesondere in Form einer U-förmigen Verformung eines Kontaktelementes oder einer S-förmigen Verformung eines Kontaktelementes.

6. Drucksensor nach einem der vorangehenden Ansprüche, wobei das Ausgleichselement Aussparungen aufweist, in welchen sich wenigstens abschnittsweise eines der Kontaktelemente erstreckt.

7. Drucksensor nach Anspruch 6, wobei das Ausgleichselement als Kreisscheibe mit einer seitlichen Ausklinkung ausgebildet ist.

## Claims

1. A pressure sensor (1) for a tyre pressure monitoring system (TPMS), with:
a housing (5a, 5b), which is formed from at least two housing parts,
a circuit board (6) with electronic components arranged thereon, wherein the electronic components form at least one circuit for detecting a gas pressure and a wireless transmission of measured data to a remote receiving device,
a battery (7) for supplying power to the electronic components, wherein
the battery (7) and the circuit board (6) are arranged in a stack and are accommodated in the housing (5a, 5b), wherein
an elastic compensating element (8) made of an electrically insulating material is arranged between the battery (7) and the printed circuit board (6), which compensating element bears against one side of the battery (7) and the circuit board (6) in each case, and
**characterised in that**,
the battery is supported on the housing (5a, 5b) on a side facing away from the compensating element.

2. The pressure sensor in accordance with claim 1, wherein the compensating element is formed from an elastic plastic, in particular a closed-pore foam.

3. The pressure sensor in accordance with one of the preceding claims, wherein the compensating element is designed as an elastic disk of uniform thickness.

4. The pressure sensor in accordance with one of the preceding claims, wherein at least two electrical contact elements make contact with the battery on both sides, wherein the contact elements are formed at least in sections with a tension/compression relief, so that a force acting in the direction of compression of the elastic compensating element is at least partially absorbed by that of the tension/compression relief.

5. The pressure sensor in accordance with claim 4, wherein the tension/compression relief is designed as an angled or curved deformation of the contacts, in particular in the form of a U-shaped deformation of a contact element, or an S-shaped deformation of a contact element.

6. The pressure sensor in accordance with one of the preceding claims, wherein the compensating element has recesses into which one of the contact elements extends, at least in sections.

7. The pressure sensor in accordance with claim 6, wherein the compensating element is designed as a circular disk with a lateral notch.

## Revendications

1. Capteur de pression (1) pour système de contrôle de pression de pneumatiques (TPMS), comportant
un boîtier (5a, 5b) qui est composé d'au moins deux parties de boîtier,
une platine (6) sur laquelle sont disposées des composantes électroniques, les composantes électroniques constituant au moins un circuit pour l'enregistrement d'une pression de gaz et une transmission sans fil de données de mesure à un dispositif de réception distant,
une batterie (7) pour l'alimentation des composantes électroniques,
la batterie (7) et la platine (6) étant disposées empilées et reçues dans le boîtier (5a, 5b), étant disposé entre la batterie (7) et la platine (6) un élément compensateur élastique (8) composé d'un matériau isolant électrique qui repose respectivement par un côté sur la batterie (7) et la platine (6) et **caractérisé en ce que** la batterie s'appuie sur un côté détourné de l'élément de compensation au niveau du boîtier (5a, 5b).

2. Capteur de pression selon la revendication 1, dans lequel l'élément de compensation est composé d'une matière plastique élastique, en particulier d'une mousse à pores fermés.

3. Capteur de pression selon une des revendications précédentes, dans lequel l'élément de compensation est réalisé sous forme d'un disque élastique d'épaisseur uniforme.

4. Capteur de pression selon une des revendications précédentes, dans lequel la batterie est en contact des deux côtés par au moins deux éléments de contact électriques, les éléments de contact étant réalisés du moins par sections avec un système de décharge de traction/pression, de sorte qu'une force agissant en direction de la compression de l'élément de compensation élastique est absorbée au moins partiellement par le système de décharge de traction/pression.

5. Capteur de pression selon la revendication 4, dans lequel le système de décharge de traction/pression est réalisé sous forme d'une déformation coudée ou courbée des contacts, en particulier sous forme d'une déformation en forme de U d'un élément de contact ou d'une déformation en forme de S d'un élément de contact.

6. Capteur de pression selon une des revendications précédentes, dans lequel l'élément de compensation présente des échancrures dans lesquelles un des éléments de contact s'étend du moins par sections.

7. Capteur de pression selon la revendication 6, dans lequel l'élément de compensation est réalisé sous forme d'un disque circulaire pourvu d'une entaille latérale.
